# EUROPEAN PATENT APPLICATION

(11) **EP 1 143 543 A2**
(43) Date of publication of application: **10.10.2001**
(21) Application number: 01103009.5
(22) Date of filing: 08.02.2001
(51) Int. Cl.: H01M 4/04, H01G 4/06, H01G 9/04

(54) **Electrode structure, battery and electrical double-layer capacitor and method of manufacturing same**

(30) Priority: 09.02.2000 JP 2000032279
(71) Applicant: NISSHINBO INDUSTRIES, INC., Chuo-ku, Tokyo (JP); ITOCHU CORPORATION, Chuo-ku, Osaka-shi, Osaka (JP)
(72) Inventor: Sato, Takaya, Nisshinbo Industries, Inc., Chiba-shi, Chiba-ken (JP); Shimizu, Tatsuo, CI Techno-Sales Inc., Tokyo (JP)
(74) Representative: Sajda, Wolf E., Dipl.-Phys.

(57) **Abstract**

An electrode structure composed of a low resistance electrode film (18) with good bonding properties on a current-collecting member surface (13), and a manufacturing method for a battery and double-layer capacitor utilizing that element are disclosed. An electrode structure is formed as follows: a mixed compound containing an electrode material (11), a binder (17) and a solvent (19) is coated on a current-collecting member surface (13), infrared radiation is directed onto the mixed compound, to vaporize the solvent (19), and to form an electrode film (18) on the current-collecting member surface (13). This invention relates to a method for manufacturing an electrode structure and a method for manufacturing a battery and an electrical double-layer capacitor.

## Description

### BACKGROUND OF THE INVENTION

### Field of the Invention

The present invention relates to a novel method of manufacturing an electrode structure, and to a manufacturing method for producing a battery and an electrical double-layer capacitor utilizing the electrode structure.

### Description of Related Art

A typical electrode structure of the prior art is manufactured by coating a current-collecting member surface with a compound mixture containing an electrode material, a powdered electrically-conducting substance, a binder and a solvent, vaporizing the solvent by applying heated air to the coating in a hot air heating oven, and drying the coating to attach an electrode film to the surface of the current-collecting member. Unfortunately, the electrode film is prone to peel away from the current-collecting member and as a consequence the electrical resistance of the electrode film does not decrease.

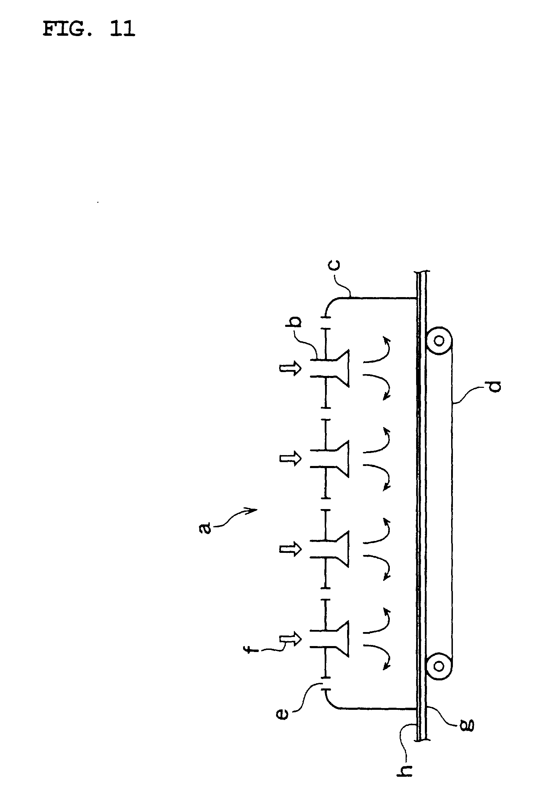

This prior art process is constituted as shown for example in FIG. 11. As shown, the electrode structure consisting of an electrode film **h** coated on a current-collecting member **g**, is transported on a conveyor **d** into a cabinet **c** inside a heated air oven. Heated air **f** is blown towards the electrode film **h** from the hot air blow outlet **b**, and the solvent contained in the electrode film **h** is made to vaporize. The heated air moves the solvent outwards by way of the cabinet outlet **e**.

### SUMMARY OF THE INVENTION

In view of the above problems with the prior art methods of forming electrode structure, this invention has the object of providing an electrode structure comprising an electrode film which strongly adheres to the current-collecting member.

This invention has the further object of providing an electrode structure comprising an electrode film with low electrical resistance.

This invention has the yet further object of providing a method of manufacturing a battery and an electrical double-layer capacitor comprising an electrode structure with an electrode film of low electrical resistance.

This invention is directed to a method of manufacturing an electrode structure by coating a compound mixture comprising an electrode material and a binder and a solvent onto a current-collecting member, directing infrared radiation onto the coating to vaporize the solvent and form an electrode film on the current-collecting member.

This invention is further directed to a method of manufacturing an electrode structure by coating a compound mixture comprising an electrode material covered with an ion-conducting polymer and a solvent, onto a current-collecting member, directing infrared radiation onto the coating mixture to vaporize the solvent and form an electrode film on the current-collecting member.

This invention is still further directed to an electrode structure manufacturing method as described above, wherein the compound mixture also contains a powdered electrically-conducting substance.

This invention still further is directed to a method of manufacturing a battery with the electrode structures as described above as the battery electrodes, wherein a compound mixture comprising a powdered electrode active substance, a powdered electrically-conducting substance, a binder and a solvent is coated onto a current-collecting member, infrared radiation is directed onto the coating of mixed material to vaporize the solvent and to form an electrode film on the current-collecting member to constitute the electrode structure.

This invention is also directed to a method of manufacturing a battery with the electrode structures as described above as battery electrodes, wherein a compound mixture comprising a powdered electrode active substance coated with ion-conducting polymer, a powdered electrically-conducting substance, and a solvent is coated onto a current-collecting member, infrared radiation is directed onto the coating of mixed material to vaporize the solvent and to form an electrode film on the current-collecting member to constitute the electrode structure.

This invention still further is directed to a method of manufacturing an electrical double-layer capacitor with the electrode structures as described above used as the capacitor electrodes, wherein a compound mixture comprising a large surface area material, a binder and a solvent is coated onto a current-collecting member, infrared radiation is directed onto the coating of mixed material to vaporize the solvent and to form an electrode film on the current-collecting member to constitute the electrode structure.

This invention yet further is directed to a method of manufacturing an electrical double-layer capacitor with the electrode structures as above described used as the capacitor electrodes, wherein a compound mixture comprising a large surface area material coated with an ion-conducting polymer and a powdered electrically-conducting substance and a solvent is coated onto a current-collecting member, infrared radiation is directed onto the coating of mixed material to vaporize the solvent and to form an electrode film on the current-collecting member to constitute the electrode structure.

### BRIEF DESCRIPTION OF THE DRAWINGS

- FIGS.1 (A) - 1(F): FIGS.1(A) - 1(F) are views showing different types of electrode structures.
- FIG. 2: is a schematic view of the fabrication of an electrode structure.
- FIG. 3: is a schematic view of drying an electrode structure by an infrared lamp device.
- FIGS.4 (A) and 4 (B): FIGS.4(A) and 4(B) are views illustrating the drying of the coated compound mixture by heated air and by infrared radiation.
- FIGS.5(A) and 5(B): FIGS.5(A) and 5(B) are views showing alternative battery structures.
- FIGS.6(A) and 6(B): FIGS.6(A) and 6(B) are views showing alternative electrical double-layer capacitors.
- FIGS.7(A) - 7(C): FIGS.7(A) - 7(C) show various levels of peeling strength as tested.
- FIG. 8: is a schematic view illustrating the covering of ion-conducting polymer.
- FIGS.9(A) - 9(D): illustrates the press-sliding mixer.
- FIG.10: is a view showing the sealing and pressing device.
- FIG.11: is a schematic view of a heated air oven.

### DETAILED DESCRIPTION OF THE PREFERRED EMBODIMENTS

The embodiments of the invention are described below while referring to the accompanying drawings.

### Electrode structure

The electrode structure of this invention can be used in the electrode(s) of electronic components wherein typically an electrolyte is provided between the electrodes. When the electrical component is a battery, the electrode structure exchanges electricity by way of electrolyte ions. When the electrical component is a double-layer capacitor, the electrode structure forms an electrical double-layer between a material with a large surface area and electrolyte.

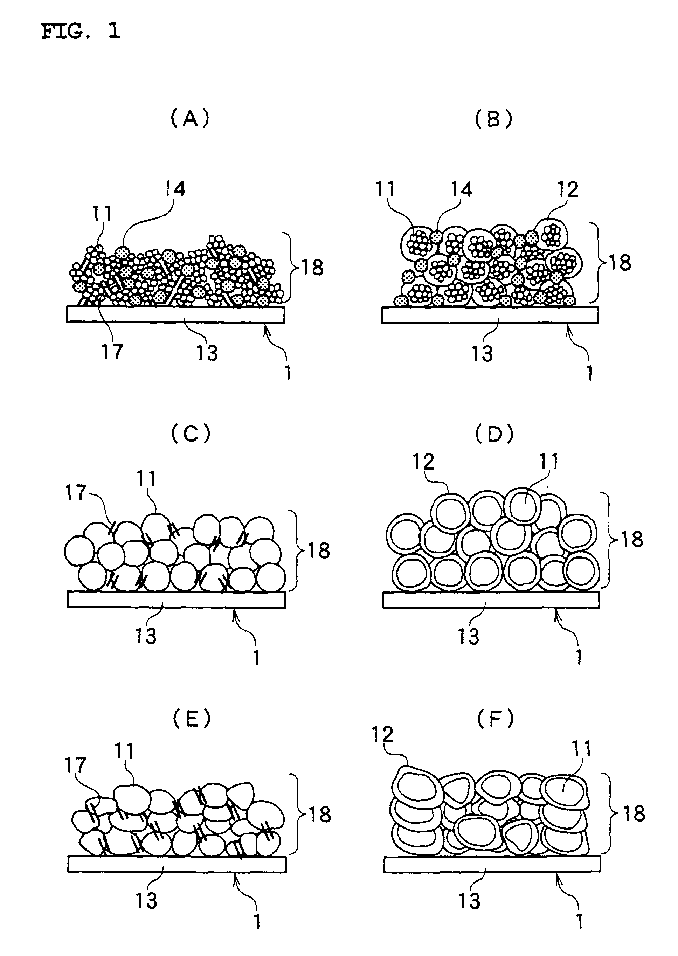

FIGS. 1(A) to 1(F) illustrate examples of typical electrode structures. The electrode structure of FIG. 1(A) is used as the positive electrode of a battery. In this figure, the electrode structure 1 is an electrode film 18 consisting of a powdered electrode active substance as an electrode material 11, a powdered conductor material 14 and binder 17, attached to the surface of a current-collecting member 13.

Here, LiCoO₂, for example, is used as the powdered electrode active substance 11. In FIG. 1(B), an ion-conducting polymer 12 is attached to the electrode material 11 of FIG. 1(A), and the ion-conducting polymer 12 also functions as a binder. FIG. 1 (C) shows an electrode structure used in the negative electrode of a battery.

In this figure, the electrode structure 1 is an electrode film 18 consisting of a powdered electrode active substance as an electrode material 11 and a binder 17, attached to the surface of the current-collecting member 13. Here, graphite powder is, for example, used as the powdered electrode active substance 11. In FIG. 1 (D), the electrode material 11 of FIG. 1 (C) is covered with an ion-conducting polymer 12. This ion-conducting polymer 12 also functions as a binder.

In FIG. 1(E), the electrode structure is used as an electrode for the double-layer capacitor. In this figure, the electrode structure 1 is an electrode film 18 consisting of a large surface area material as an electrode material 11 and a binder 17, attached to the surface of the current-collecting member 13. Here, active carbon material is used, for example, as the large surface area material.

In FIG. 1(F), the powdered active carbon material of FIG. 1(E) is covered by the ion-conducting polymer 12. This ion-conducting polymer also functions as a binder. When the electrode material 11 is covered with the ion-conducting polymer 12, this ion-conducting polymer functions as a binder. The electrode material covered with the ion-conducting polymer is described in detail later on.

### Manufacturing method for the electrode structure

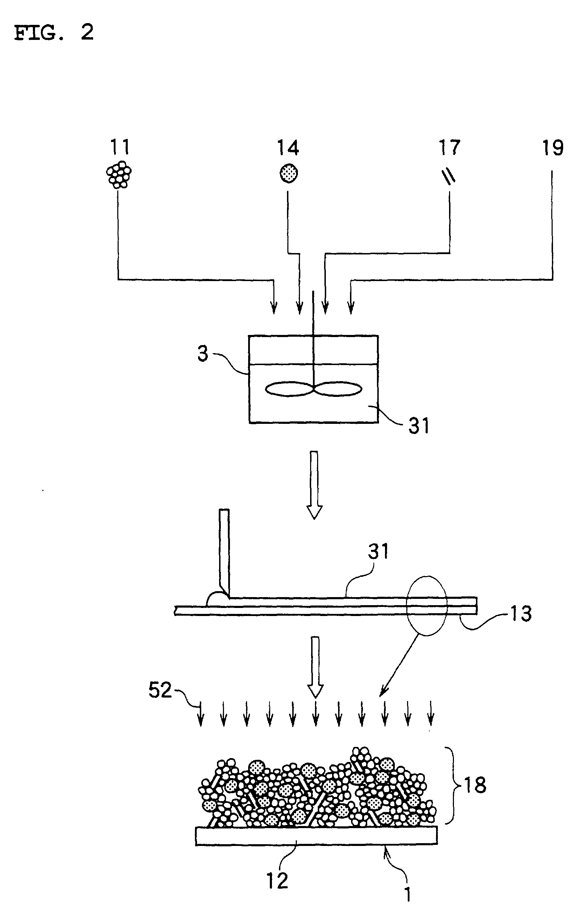

An example of the manufacturing method of this invention to produce an electrode structure is shown in FIG. 2. The electrode material 11, the powdered conductor material 14, the binder 17 and the solvent 19 are mixed together in a mixer 3 to obtain the mixed material 31. The mixed material 31 is lightly coated onto the surface of the current-collecting member 13.

The method for coating the mixed material is by surgical knife applicator, etc. The mixed material coating is vaporized, dried and attached to the current-collecting member 13 as the electrode film 18. Here, vaporizing and drying the solvent 19 and coating the mixed material 31 onto the current-collecting member 13 is not performed by applying heated air, but instead by directing infrared radiation 52 from an infrared lamp device (not shown) to the arrangement.

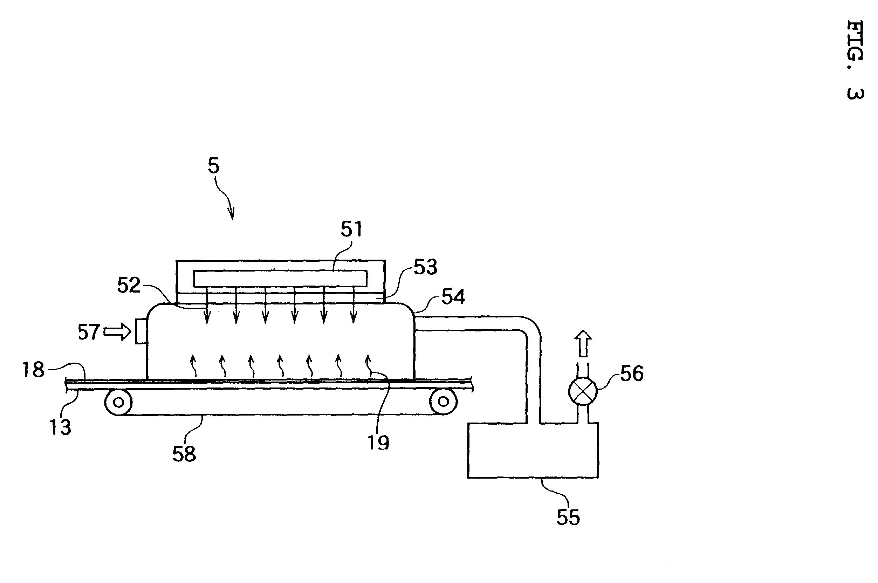

As shown for example in FIG. 3, the electrode film 18 coated onto the current-collecting member 13 is moved by a conveyor 58 into a cabinet 54, and infrared radiation 52 generated by an infrared radiation generator 51 of an infrared lamp device 5 is directed onto the electrode film 18 coated onto the current-collecting member 13.

An infrared permeable wall 53 is installed to let the infrared radiation pass between the cabinet 54 and the infrared radiation generator 51. This infrared permeable wall 53 may not be needed if no problem exists with the infrared radiation generator 51 and the type and concentration of vaporized solvent gas. The vaporized solvent 19 from the electrode film 18 is blocked off from the infrared radiation generator 51 by the infrared permeable wall 53.

The cabinet 54 filled inside by the solvent 19 reaches an equalized concentration when the concentration attains a high level, such that the vaporization is limited by recovery of the solvent by suctioning it into a solvent recovery unit 55 inside the cabinet 54 with a fan 56. In that time, external air 57 is supplied into the cabinet 54 so the external pressure will match the gas pressure inside the cabinet 54. However, this external air 57 is not for vaporizing the solvent 19 by air blow.

A level of external air 57 to well agitate the uniform concentration of the solvent is sufficient and though dependent on the size of the cabinet 54, a flow speed of for example 0.5 meters per minute is sufficient. When the electrode film 18 is coated on both surfaces of the current-collecting member 13, the infrared radiation may be directed onto both sides of the electrode structure 1.

Infrared radiation ranging from the near-infrared close to the visible light level to mid-infrared, to far-infrared close to the electromagnetic spectrum can be used rather than propagation of heat to the mixed material through the air. If the mixed material can be heated remotely with hardly any transmission through air, then any type of infrared radiation may be utilized. Near-infrared radiation has a high transmittance (permeance) rate into the interior of the mixed material so that the interior of the mixed material can be heated.

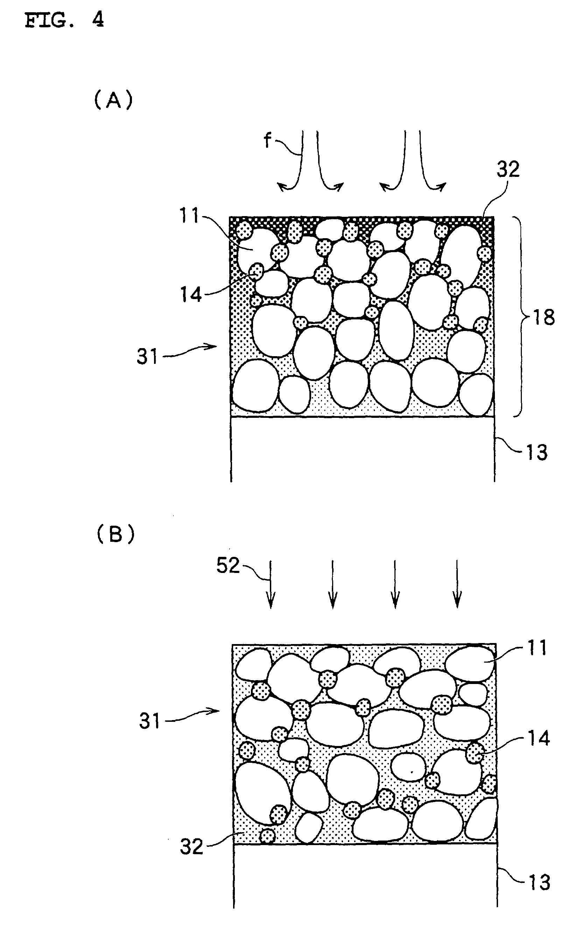

When infrared radiation is used as a means to vaporize the solvent 19 and dry the mixed material 31, the electrode film 18 adheres (or bonds) well to the current-collecting member 11, and the electrical resistance of the electrode film 18 is also low. The reason for the improved properties can be explained by referring to FIG. 4.

FIG. 4 shows an enhanced view of the internal state of the mixed material 31 when the solvent 19 of the mixed material coated on the current-collecting member 12 is vaporized. FIG. 4(A) shows the conventional method of applying heated air f onto the mixed material 31 to vaporize the solvent 32 mixed with a binder. FIG. 4(B) shows the method of this invention wherein infrared radiation 52 is directed onto the mixed material 31 to vaporize the solvent 32 mixed with a binder.

The solvent vaporization process works as follows in the case of the conventional method of FIG. 4(A). When heated air **f** is applied to the surface of the mixed material, the area around the surface of the mixed material 31 suddenly warms up in the heated air, and the solvent on the surface is vaporized and blown away by the heated air **f**.

The solvent near the surface therefore quickly vaporizes, and to compensate, the solvent at the interior of the mixed material and near the collector electrode moves to the vicinity of the surface. The binder contained in the solvent and the powdered conducting material are at this time carried to the surface of the mixed material 31 along with the solvent.

As a result, the concentrations of binder on the current-collecting member side of the mixed material and powdered conducting material become weak (or thin). The electrode film therefore tends to easily peel away from the current-collecting member 13, and the relative electrical resistance in the vicinity- of the current-collecting member becomes high, and the resistance of the electrode overall becomes high.

In contrast, in the method of this invention shown in FIG. 4(B), the solvent vaporization process works as follows. When the infrared radiation 52 is directed onto the mixed material surface, the infrared radiation 52 permeates through into the interior of the mixed material, and heats up the entire mixed material.

No heated air is blown at this time so that the solvent gradually evaporates (vaporizes) from the surface of the mixed material. The concentrations of binder and powdered conducting material 14 therefore remain uniform overall. As a result, the binder concentration in the vicinity of the current-collecting member does not become weak (or thin) in the electrode material of dried mixed material 31.

Accordingly, the electrode film adheres well to the current-collecting member 13. Further, the concentration of the powdered conducting material in the vicinity of the current-collecting member does not become weak either, so that the electrical resistance of the overall electrode film is low.

### Current-collecting member

The current-collecting member 13 may be any material capable of conducting electricity, and the material and shape can be selected according to the electronic component. As one example, the electrolyte may be aluminum or copper and formed in a plate, leaf or mesh shape. When the current-collecting member is a plate or has a leaf shape, one or both sides are used according to the structure of the electronic component.

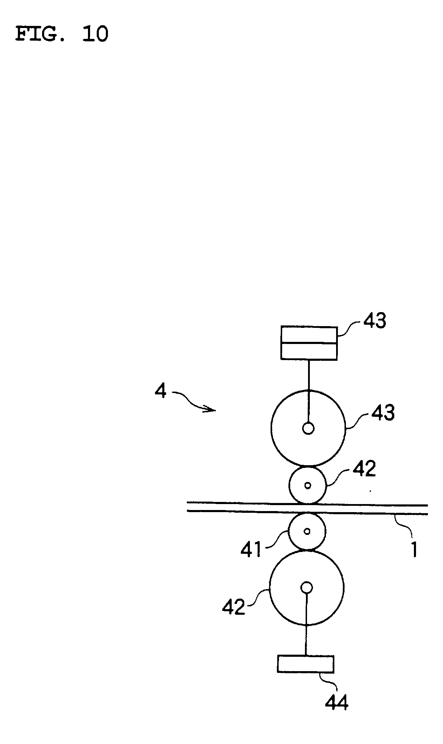

The electrode film 18 for adhering to the current-collecting member 13 may be pressed into the current-collecting member to make it further adhere. The bonding (adhering) may for instance be performed with a sealing and pressing device 4 such as shown in Fig. 10. An electrode structure 1 made from current-collecting member coated with mixed material is enclosed by pressure rollers 41, and the electrode film can be bonded to the current-collecting member by applying a rotating pressure with the pressure device 43 by means of a backroller 42.

### Battery

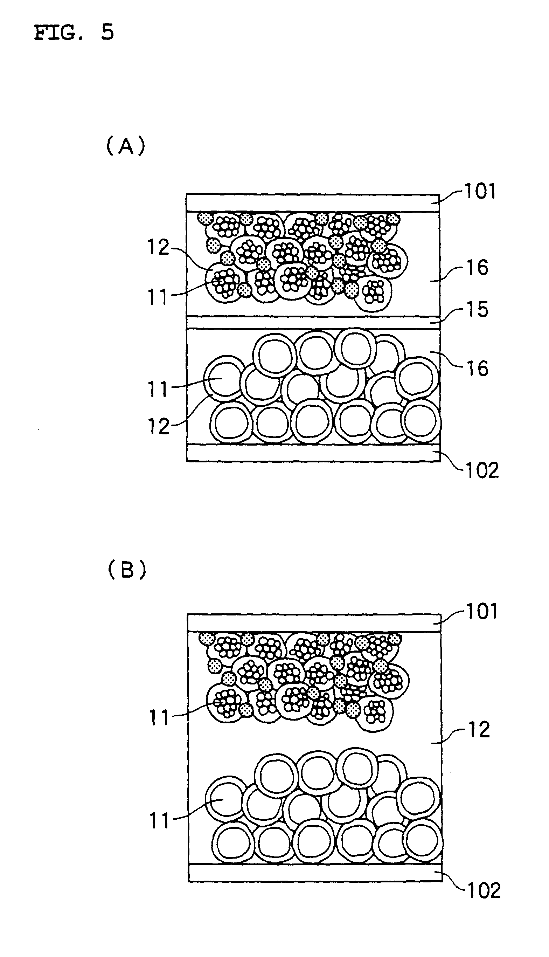

The electrode structure of FIG. 1(A) or FIG. 1(B) can be used as the positive electrode, and an electrode structure useful as a negative electrode is shown in FIG. 1(C) or FIG. 1(D). An electrolyte is positioned between these electrodes. FIGS. 5(A) and 5(B) show an example of a battery with an electrode structure the same as the positive electrode in FIG. 1 (B) and a battery with an electrode structure the same as the negative electrode in FIG. 1(D).

Here, FIG. 5(A) shows the case when the electrolyte is a liquid electrolyte 16, and a separator 15 is placed between the electrodes. FIG. 5(B) shows the case when the electrolyte is an ion-conducting polymer 12 in solid. The separator 15 is installed to isolate one pair of electrode structures 1, and the electrolyte can be used in solid when required according to circumstances.

### [Dual] Double-layer capacitor

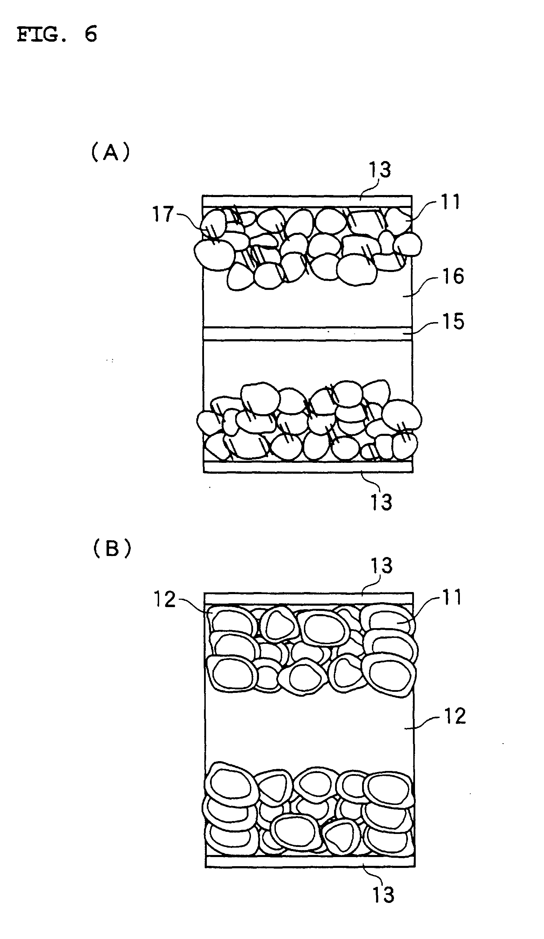

The double-layer capacitor has a structure with an electrolyte placed between one pair of electrodes of the electrode structure of FIG. 1(E) or one pair of electrodes of the electrode structure of FIG. 1(F). A double-layer capacitor utilizing the electrode structure of FIG. 1(E) is shown in FIG. 6(A), and a double-layer capacitor utilizing the electrode structure of FIG. 1(F) is shown in FIG. 6(B).

In FIG. 6(A), a separator 15 is placed between the electrodes when the electrolyte is the liquid electrolyte [electrolytic fluid] 16. FIG. 6(B) shows the case when the electrolyte is an ion-conducting polymer 12 in solid. The separator 15 is installed to isolate one pair of electrode structures 1, and the electrolyte can be used in solid [solution] when required according to circumstances.

Examples of the electrode structure are described next.

### Making the electrode structure sample pieces

Eight electrode structure sample pieces 1 - 11 were dried using two types of heating methods; one method was infrared heating and the other was the heated air method of the prior art. The peeling strength and impedance (Ohm) of these sample pieces were measured. The ratio (proportions) of electrode material, powdered conducting material, binder, and solvent material used in the preparation of the sample pieces are shown in Table 1. The results of peeling strength and impedance (Ohm) are shown in Table 2.

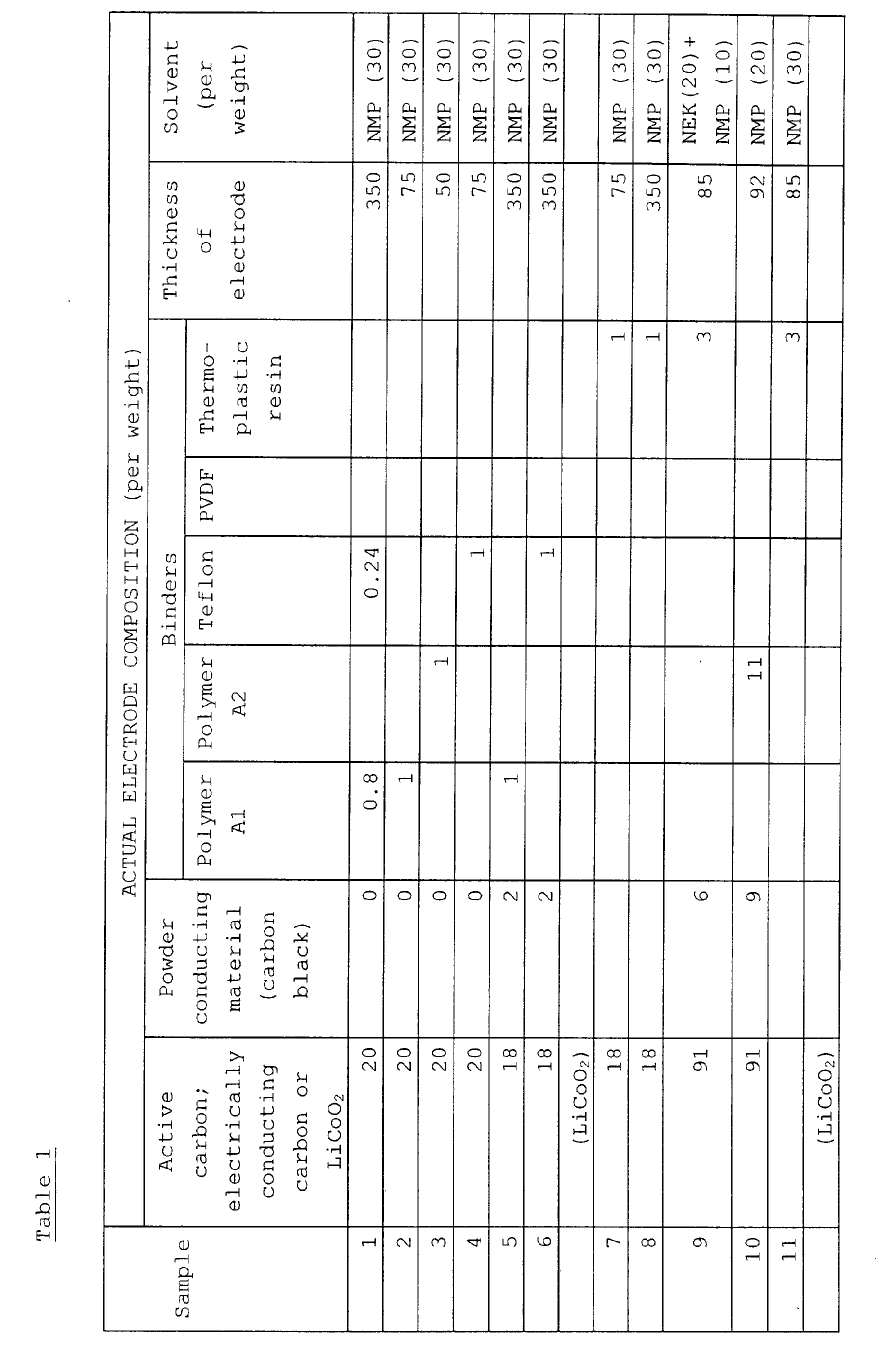

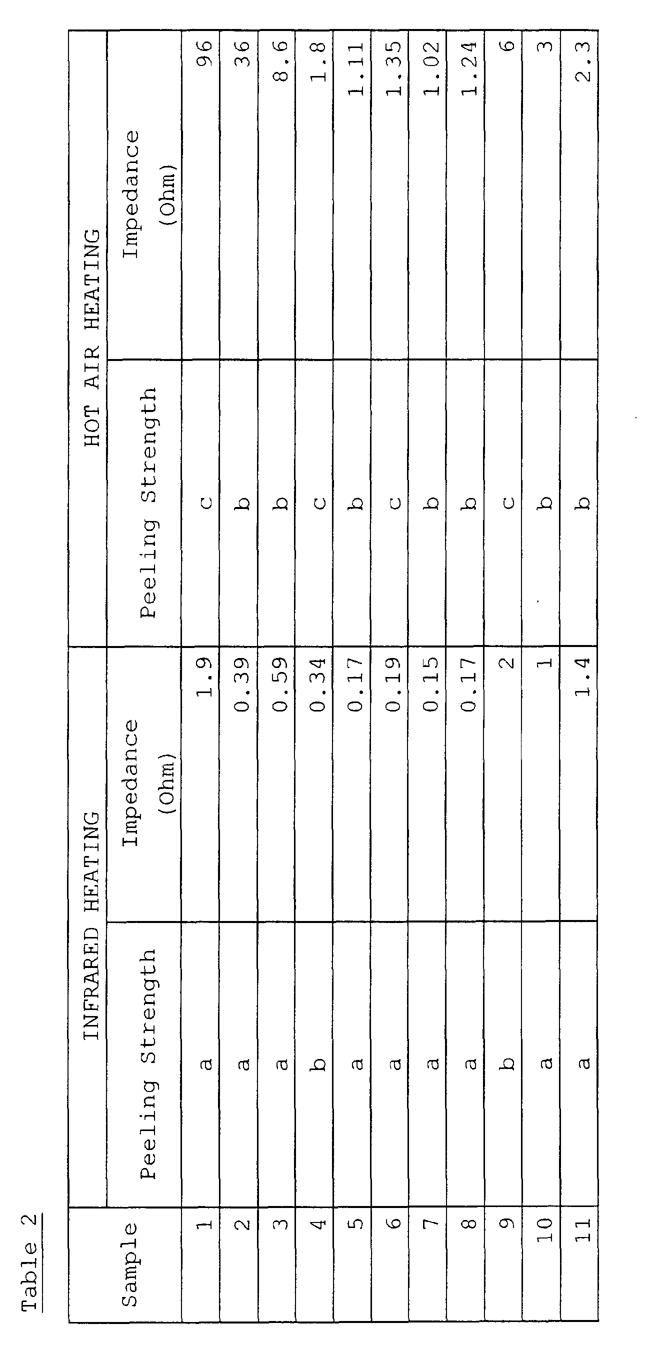

The samples 1 through 8 are electrodes useful for capacitors. The electrode material was made from phenol resin [phenol active carbon] (made by Kansai Chemical Corp.) which was dry mixed with carbon black as the powdered conductive material, utilizing a mixer. The samples 9 through 11 are positive electrodes for batteries. Carbon black as the powdered conductive material was added to LiCoO₂ which served as the electrode material by dry type mixing performed utilizing a mixer.

The binder was then added to all the samples 1 through 11 and mixing performed. A specified amount of solvent was further added and mixing performed. After mixing, the material was coated onto the collector element with a surgical knife applicator. The samples were then heated by infrared radiation or by heated air.

A far-infrared ceramic panel heater PH-100, iPH100C (made by SAKAGUCHI E.H VOC CORP.) was utilized as the infrared lamp device. The infrared radiation drying conditions for all the samples were 30 Volts for one hour.

A device as shown in FIG. 11 was utilized as the heated air oven to apply heated air onto the surface of the mixed material from the hot air blow outlet. The heated air was regulated to a temperature of approximately 80 to 200 °C and a flow speed of 15 to 25 meters per minute.

The samples 1 to 8 utilized [electrically-conducting] active carbon material as the electrode material. Sample 9 utilized LiCoO₂ as the electrode material and PVDF as the binder. Sample 10 utilized LiCoO₂ as the electrode material and polymer A2 as the binder, and was covered with ion-conducting polymer. Sample 11 uses LiCoL₂ as the electrolyte and thermoplastic resin as a binder. Samples 1 through 4 contained no carbon black powdered electrically-conducting substance, and samples 5 through 11 [5 through 8] contained carbon black though there were differences in the concentrations used in the samples.

Polymer Al, polymer A2, Teflon powder, PVDF (polyvinylidene fluoride), and thermoplastic resin were used as the binders. Polymer A1, and polymer A2 were ion-conducting polymers. The raw materials used to form polymers A1 and A2 are shown in Table 3 and Table 4, respectively. NMP (N methyl-2-pyrrolidone) was mainly used as the solvent, and MEK (methyl ethyl ketone) was used only in preparing sample 7.

**Table 3**

| Ion-conducting polymer raw material (A1) | |
|---|---|
| Substance | Mixing ratio (weight parts) |
| Difunctional (propylene glycol/ethylene glycol) random copolymer, SANNIX FA-103 (PO/EO=2/8, Mw=3,282, Sanyo Chemical Industries, Ltd.) | 8.36 |
| Difunctional polyol, 1, 4-butanediol | 0.34 |
| Ethylene cyanohydrin | 1.27 |
| Reaction catalyst NC-IM (Sankyo Air Products K.K.) | 0.03 |
| Total | 10 |

Thermoplastic resin is composed as follows: A preheat-dehydrated polycaprolactonediol (Placcel 220N, DAICEL CHEMICAL INDUSTRIES, LTD) of 4.34 by weight, 4,4'-diphenylmethane diisocyanate of 28.57 by weight are to be prepared in a reactor having an agitation device, a thermometer, and a cooling pipe and are agitated and mixed 2 hours at 120 °C under a nitrogen current; 1,4-butanediol of 7.09 by weight is added and similarly reacted at 120 °C under nitrogen current. As the reaction proceeds and stops when the reactant becomes a rubber like substance.

Then, the reactant is removed from the reactor and heated for 12 hours at 100 °C. The heating is stopped after verifying an extinction of the absorption peak of isocyanate base due to the infrared absorption spectrum, thereby obtaining a solid thermoplastic resin. The weight average molecular of thermoplastic resin as a result (Mw) was 1.71X10⁵.

**Table 4**

| Ion-conducting polymer raw material (A2) | |
|---|---|
| Substance | Mixing ratio (weight parts) |
| Cyanoethylated/dihydroxypropylated polyvinyl alcohol | 0.625 |
| Methoxypolyethyleneglycol methacrylate (mol. wt. 468) | 3.125 |
| Trimethylolpropanetrimethacrylate (mol. wt. 536) | 6.25 |
| Total | 10 |

### Electrode structure measurement results

To measure the peeling strength, cellophane tape (KOKUYO TSS18N width 18mm, thickness 50 µm) was attached to the electrode film fabricated on the surface of the current-collecting member, and the cellophane tape then pulled away to make the electrode film stuck to the cellophane tape separate from the current-collecting member.

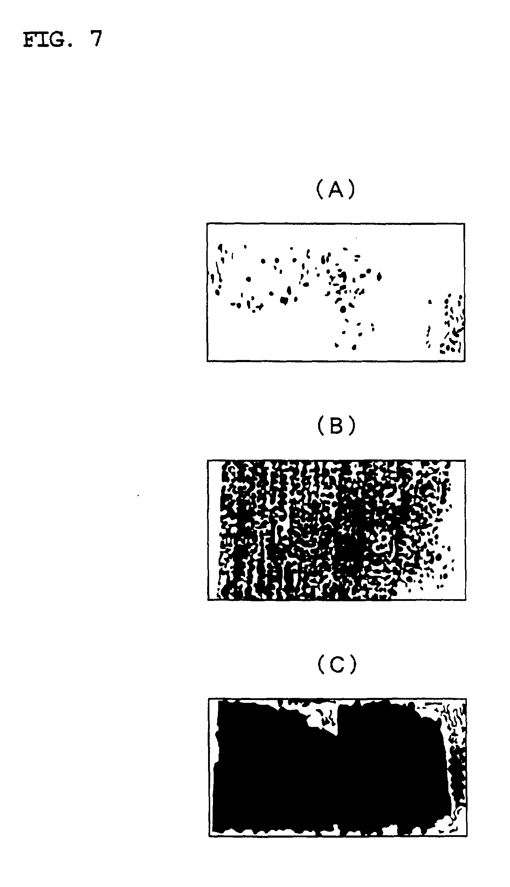

A peeling strength ranking could then be established according to the amount of electrode film peeled from the surface of the current-collecting member. FIG. 7 taken from photographs shows the electrode film stuck to the cellophane tape. In FIG. 7(A), a mere fraction of the upper layer of the electrode film has thinly peeled away (The black portion is the portion where the electrode film has peeled.) and is rank **a**.

In FIG. 7(B), a middle layer of the electrode film has thinly peeled off (The black portion is the portion where the electrode film has peeled.) and is rank **b**. In FIG. 7(C), a the electrode film has completely peeled off from the current-collecting member (The black portion is the portion where the electrode film has peeled.) and is rank **c**.

To measure the impedance (Ohm), the electrodes formed on the collector element were enclosed by copper plates of 2 centimeters in diameter and 5 millimeters thick. A pressure of 4.5 kilograms per centimeter was applied from above and below, and the resistance at 10 kHz AC was measured with an impedance analyzer.

On comparing infrared heated samples and hot air heated samples having the same sample numbers, in all cases, the peeling strength for the infrared heated samples was found to be one or two ranks higher than the heated air samples. In the impedance test results also, the infrared heated samples had an impedance (Ohm) which was small, indicating low resistance.

The electrode material coated with ion-conducting polymer is described next.

### Electrode structure coated with ion-conducting polymer

In FIG. 1, the powdered electrode active substance 11 has the shape of particles consisting of bonded particles like LiCoO₂, and the process for depositing the ion-conducting polymer 12 is shown. The term "coating" refers to a state where ions can migrate sufficiently between the ion-conducting polymer 12 and the powdered electrode active substance 11 over their entire surfaces.

The ion-conducting polymer 12 is deposited on the surface of the powdered electrode active substance 11 as a coating of ion-conducting polymer 12. The finer the particles, the more active the powdered electrode active substance 11 becomes.

However, this increased activity is suppressed by depositing a coating of ion-conducting polymer 12 on the electrode active substance 11, so the powdered electrode active substance 11 can become stable. When the deposit of ion-conducting polymer 12 is thick, the electrical conduction decreases, and the current (charge) collection is poor.

Accordingly, forming a thin coating of ion-conducting polymer is preferable. Inventions relating to electrode structures coated with ion-conducting polymer have already been proposed by the applicants of this invention (Japanese Patent Application 11-262501, and Japanese Patent Application 11-262502).

The powder shape such as for the powdered electrode active substance 11 and powdered conducting material 14 is a fine particle substance. Further such a powder is a collection of many substances. In certain cases, this fine particle substance refers to a state wherein a large number of substances in a fine particle state constitute an agglomeration.

### Powdered electrode active substance

The powdered electrode active substance uses ion insertable-separable materials and π-conjugated conductive macromolecular materials. There are no particular restrictions on the electrode active substance used as the positive electrode for non-aqueous electrolyte batteries. However, in the case of chargeable batteries, chalcogen compounds allowing ion insertion/separation or composite chalcogen compounds containing lithium are recommended.

Useful chalcogen compounds may be FeS₂, TiS₂, MoS₂, V₂O₅, V₆O₁₃, MnO₂, etc. Typical chalcogen compounds containing lithium are LiCoO₂, LiₓNi_{y}M_{1-y}O₂, (where **M** expresses one or more metallic elements selected from transitional metals and aluminum, and preferably one or more metallic elements selected from among cobalt, manganese, titanium, chromium, vanadium, aluminum, and 0.05 ≦ x ≦ 1.10, 0.5 ≦ y ≦1.0) and composite lithium oxides, LiNiO₂, LiMnO₂, LiMn₂O₄, etc.

These compounds may be obtained by using lithium, cobalt, nickel, manganese oxides, salts or hydroxides as starting materials, mixing these starting materials together according to the composition desired and baking the mixture in an oxygen atmosphere at a temperature of 600 to 1000 °C.

There are no particular restrictions on the electrode active substance used as the negative electrode for non-aqueous electrolyte batteries. However, a material allowing lithium ion insertion/separation may be used, and lithium metal, lithium alloys (alloys such as lithium and aluminum, lead, indium) and carbon quality materials may be utilized.

Polyacetylene types, polyaniline types, polypyrrole types, polythiophene types, poly p(para) -phenylene[s] types, polycarbazole types, polyacene types and sulfur polymer types are among the useful π-conjugated conductive macromolecular materials.

Using lithium metals in the negative electrode achieves a large battery capacity particularly in primary non-aqueous electrolyte batteries.

Also in non-aqueous electrolyte batteries, using carbon materials in the negative electrodes, that are capable of lithium ion insertion/separation yields a longer battery cycle life span. There are no particular restrictions on the carbon material used but materials such as pyrolytic carbon types, coke types (pitch coke, needle coke and petroleum coke, etc.) graphite types, glass carbon types, organic macromolecular compound fired products (carbonized pieces baked to a suitable temperature such as phenol resin, furan resin) carbon fibers and active carbon may be utilized.

### Powdered electrically-conducting substance

The powdered electrically-conducting substance raises the conductivity of the electrode structure and though there are no particular restrictions, materials such as metal powder and carbon powder may be used. Particularly preferred carbon powders are pyrolytic carbons such as carbon black, and their graphite products, artificial and natural scaly graphite powder, carbon fibers and their graphite products, etc. Product mixtures of these carbon powders are also utilized.

### Ion-conducting polymer

The ion-conducting polymer is a polymer which can dissolve at least the lithium salts described hereafter at a concentration of at least 0.1 M (moles/l), the polymer containing the lithium salt at a concentration of at least 0.1 M having an electrical conductivity of 10⁻⁸ S (siemens)/cm at room temperature. It is to be particularly preferred that the ion-conducting polymer dissolves at least lithium salts to a concentration of 0.8 M-1.5 M, the resulting polymer [solution] having an electrical conductivity of 10⁻² S/cm to 10⁻⁵ S/cm at room temperature.

The lithium salt is at least one type of lithium salt having ClO₄⁻, CF₃SO₃⁻, BF₄⁻, PF₆⁻, As F₆⁻, SbF₆⁻, CF₃CO₂⁻ or (CF₃SO₂)₂N⁻ as an anion.

The ion-conducting polymer raw material is a substance which produces the ion-conducting polymer by cross-linking, etc., when energy is supplied externally. The energy may be heat, ultraviolet light, light or electron radiation.

The method of manufacturing these electrode structures will now be described.

### (a) Manufacture of electrode structure

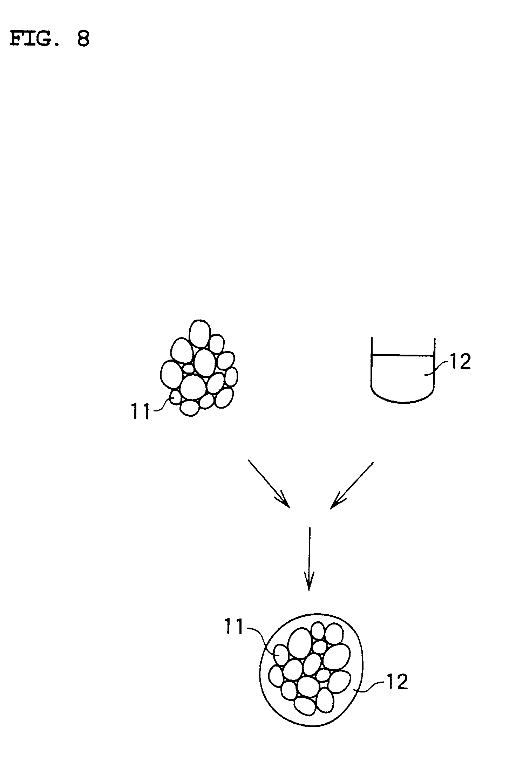

The method of coating the powdered conductive material with the ion-conducting polymer as is shown in Fig. 8 is to press-slide the ion-conducting polymer and the powdered electrode active substance against each other.

In this process, by using only a minute amount of the ion-conducting polymer, the particle surfaces of the powdered electrode active substance are coated with the ion-conducting polymer, no voids are formed, and gaps in the powdered substance are reduced.

### (b) Press-sliding

Press-sliding is the action of sliding while pressing mixtures 10 of the ion-conducting polymer 12 or the raw material of the ion-conducting polymer 12 and the powdered substance 11 together. An external force is applied to the mixtures so that they cohere to each other and the particles rotate, and this process is performed repeatedly to obtain a press-sliding product.

### (c) Press-sliding mixer

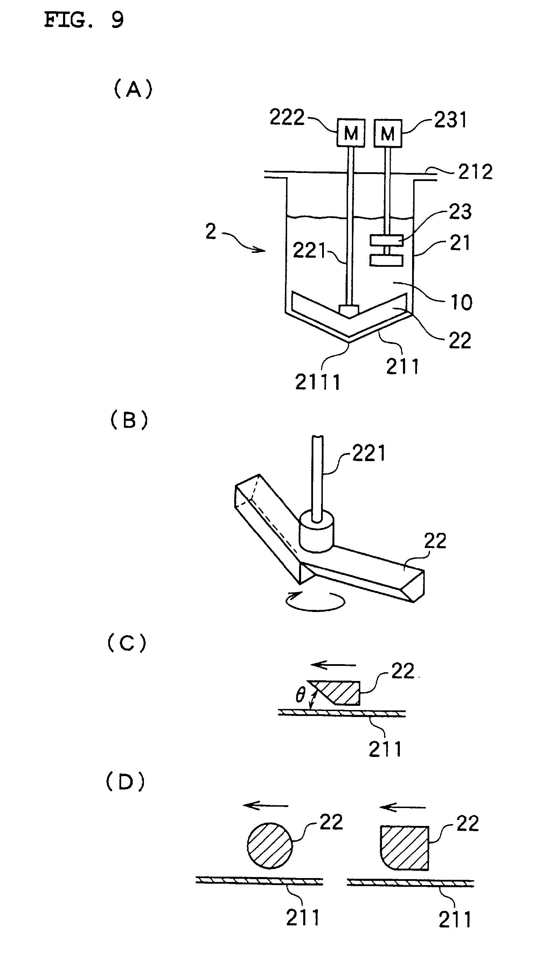

The press-sliding mixer is shown, for example, in Fig. 9(A). The mixture 10 of the ion-conducting polymer 12 or its raw material with the powdered substance 11, or the mixture 10 comprising this mixture and a solvent or the like, is introduced into a container 21 via a container top 212, and a main blade 22 is rotated such as by a motor 222.

There is a gap between a base 211 of the container 21 and a bottom surface of the main blade 22. When the main blade 22 is rotated, part of the mixture 10 enters the space between a base 211 of the container and the main blade 22, is subjected to press-sliding, and is kneaded. This process is repeated so that the ion-conducting polymer 12 or its raw material coats the powdered substance 11.

A press-sliding mixer 2 may if necessary be provided with a dispersion blade 23 in the container 21. The dispersion blade 23 is rotated at high speed via a motor 231 to disperse the press-slid mixture 10.

### (d) Container

The container 21 is provided for holding the mixture 10 which is press-slid and stirred. The bottom surface or base 211 of the container 21 slants upwards from a central bottom part 2111 towards the circumference of container 21. The bottom 211 may be formed in the shape of, for example, a grinding mortar, and the angle of the slant of bottom part 211 may, for example, be 120 degrees. The bottom 211 of the container is wear-resistant, and can be formed by thermal spraying with tungsten or carbide using SUS. Plural bottom parts of this type may also be formed on the bottom surface 211.

### (e) Main blade

The main blade 22 functions together with the bottom surface 211 of the container 21, serving to press-slide and stir the mixture 10.

The main blade 22, is positioned via a shaft 221 to the desired location relative to the bottom 211 of the container 21 as shown for example in Figs. 9(A) and 9(B). Main blade 22 curves upwards corresponding to the slant of bottom 211 of the container 21. The main blade 22 may comprise two blades attached from the center part as shown in Fig. 9(B), or it may comprise a larger number of blades, e.g. 10 or more, depending on the amount and type of mixture.

The number of rotations of a main motor 222 driving the main shaft 221 is set low for example to 120 min⁻¹ or less, when press-sliding is performed.

The gap between the bottom surface 211 of the container 21 and the base surface of the main blade 22 is set as narrow as is necessary for press-sliding the mixture, for example 15 mm or less. This distance depends on the capacity of the press-sliding mixer 2 and on the shape of the main blade, etc.

The surface in the motion direction (press-sliding direction) of the main blade 22 is formed so that a pressing angle θ relative to the bottom surface of the container 21 is an acute angle. For example, if the cross-section of the main blade 22 is a reverse trapezoid as shown in Fig. 9(C), the pressing angle is from 3° to 70°. The cross-section of the main blade 22 may also be circular or have a rounded corner as shown in Fig. 9(D).

The material of the main blade has wear-resistant properties, and is formed for example by thermal spraying with tungsten or carbide using SUS.

If a surface in a direction opposite to the motion direction (press-sliding direction) of the main blade 22 is formed for example effectively perpendicular to or at an obtuse angle to the bottom surface, the mixture 10 can be collected around the main shaft 221 by rotating the main shaft 221 in the reverse direction.

If there is a plurality of bottom parts on the bottom surface 211, the center parts of the main blade 22 are also disposed in positions of the bottom part corresponding to their number.

### (f) Dispersing blade

The dispersion blade 23 is intended to disperse the mixture 10 which has been press-slid by the main blade 22. The dispersion blade 23 is disposed in a position at which the mixture 10 can be dispersed, and it rotates at a high speed for example at 1000 to 4000 min⁻¹. Due to this high speed rotation, the ion-conducting polymer 12 or its raw material coated on the particle surfaces of the powdered substance 11 uniformly disperses through the whole of the powdered substance.

This invention as described above, renders the following effects.

An electrode film that adheres well to the current-collecting member can be obtained.

An electrode film with low electrical resistance can be obtained.

A battery or double-layer capacitor with an electrode film having low electrical resistance and good bonding can be obtained.

## Claims

**1.** A method of manufacturing an electrode structure comprising:
coating a compound mixture (31) composed of an electrode material (11), a binder (17), and a solvent (19) onto a current-collecting member (13), vaporizing the solvent (19), and forming an electrode film (18) on the current-collecting member (13).

**2.** A method of manufacturing an electrode structure comprising:
coating a compound mixture (31) composed of an electrode material (11) covered with ion-conducting polymer (12) and a solvent (19), onto a current-collecting member (13), vaporizing the solvent (19), and forming an electrode film (18) on the current-collecting member (13).

**3.** A method of manufacturing an electrode structure by coating a compound mixture (31) comprising an electrode material (11), a binder (17), and a solvent (19) onto a current-collecting member (13), directing infrared radiation onto the compound mixture coating to vaporize the solvent (19) and form an electrode film (18) on the current-collecting member (13).

**4.** A method of manufacturing an electrode structure by coating a compound mixture (31) comprising an electrode material (11) covered with an ion-conducting polymer (12) and a solvent (19), onto a current-collecting member (13), directing infrared radiation onto the compound mixture coating to vaporize the solvent (19) and form an electrode film (18) on the current-collecting member (13).

**4.** The electrode structure manufacturing method according to claim 3 or 4, wherein the compound mixture also contains a powdered electrically-conducting substance.

**6.** A method of manufacturing a battery comprising an electrode structure as the battery electrodes, wherein a compound mixture (31) comprising a powdered electrode active substance (11), a powdered electrically-conducting substance, a binder (17) and a solvent (19) is coated onto a current-collecting member (13), infrared radiation is directed onto the coating of mixed material to vaporize the solvent (19) and to form an electrode film (18) on the current-collecting member (13) to constitute the electrode structure.

**7.** A method of manufacturing a battery comprising an electrode structure as battery electrodes, wherein a compound mixture (31) comprising a powdered electrode active substance (11) coated with an ion-conducting polymer (12), a powdered electrically-conducting substance, and a solvent (19) is coated onto a current-collecting member (13), infrared radiation is directed onto the coating of mixed material to vaporize the solvent (19) and to form an electrode film (18) on the current-collecting member (13) to constitute the electrode structure.

**8.** A method of manufacturing an electrical double-layer capacitor with an electrode structure used as the capacitor electrodes, wherein a compound mixture (31) comprising a large surface area material (11), a binder (17) and a solvent (19) is coated onto a current-collecting member (13), infrared radiation is directed onto the coating of mixed material to vaporize the solvent (19) and to form an electrode film on the current-collecting member (13) to constitute the electrode structure.

**9.** A method of manufacturing an electrical dual-layer capacitor with an electrode structure used as the capacitor electrodes, wherein a compound mixture (31) comprising a large surface area material (11) coated with an ion-conducting polymer (12) and a powdered electrically-conducting substance and a solvent (19) is coated onto a current-collecting member (13), infrared radiation is directed onto the coating of mixed material to vaporize the solvent (19) and to form an electrode film (18) on the current-collecting member (13) to constitute the electrode structure.
